# EUROPÄISCHE PATENTANMELDUNG

(11) **EP 0 645 896 A2**
(43) Veröffentlichungstag der Anmeldung: **29.03.1995**
(21) Anmeldenummer: 94112751.6
(22) Anmeldetag: 16.08.1994
(51) Int. Cl.: H04B 1/59, H04B 14/00

(54) **Verfahren zur Duplex-Datenübertragung zwischen einer Bake und einem Fahrzeug**

(30) Priorität: 24.09.1993 DE 4332474
(71) Anmelder: ROBERT BOSCH GMBH, 70442 Stuttgart (DE)
(72) Erfinder: Bode, Friedrich-Wilhelm, Dipl.-Ing., D-31552 Apelern (DE); Vahle, Andreas, Dipl.-Ing., D-31141 Hildesheim (DE)

(57) **Zusammenfassung**

Erfindungsgemäß wird vorgeschlagen, bei der Duplex-Datenübertragung zwischen einer Bake und einem Fahrzeug nach dem passiven Transponder-Verfahren gleichzeitig die gleiche Frequenz zu verwenden. Um die gegenseitige Störung der Sendesignale zu eliminieren, werden die Signale in unterschiedliche Polarisationsebenen abgestrahlt. Vorteilhaft ist dabei, daß für beide Polarisationsebenen nahezu die gleichen Antennen verwendet werden können. Dadurch kann sowohl die Bake als auch das Fahrzeuggerät gleichzeitig senden. Dadurch wird eine geringere Bandbreite benötigt. Auch können mehr Daten übertragen werden.

## Beschreibung

### Stand der Technik

Die Erfindung geht aus von einem Verfahren zur Duplex-Datenübertragung zwischen einer feststehenden Bake zu einen Fahrzeuggerät und umgekehrt zwischen dem Fahrzeuggerät und der Bake nach der Gattung des Hauptanspruchs. Beim bekannten Datenübertragungsverfahren, beispielsweise nach dem passiven Transponder-Verfahren, werden im Downlink und Uplink unterschiedliche Frequenzen verwendet. Dadurch werden mehrere Frequenzkanäle mit entsprechenden Bandbreiten benötigt. Auch sind für jeden Kanal entsprechende Filterschaltungen vorgesehen, um ein Übersprechen auf Nachbarkanäle zu vermeiden.

### Vorteile der Erfindung

Das erfindungsgemäße Verfahren bzw. die erfindungsgemäße Bake und das Fahrzeuggerät mit den kennzeichnenden Merkmalen der nebengeordneten Ansprüche 1, 5 und 8 haben demgegenüber den Vorteil, daß sowohl für den Downlink- als auch für den Uplink-Betrieb die gleiche Frequenz verwendet werden kann. Besonders vorteilhaft ist weiter, daß die benötigte Bandbreite wesentlich geringer ist und praktisch identische Antennen mit nur geringen Modifikationen eingesetzt werden können. Da auch keine aufwendigen Filterschaltungen erforderlich sind, ergeben sich günstige Herstellkosten.

Durch die in den abhängigen Ansprüchen aufgeführten Maßnahmen sind vorteilhafte Weiterbildungen und Verbesserungen des Verfahrens bzw. der Bake und des Fahrzeuggerätes möglich. Besonders vorteilhaft ist, daß die Datenübertragung zwischen der Bake und dem Fahrzeuggerät gleichzeitig erfolgen kann, so daß dadurch mehr Daten übertragbar sind.

Die Anwendung der Datenübertragung nach dem passiven Transponder-Verfahren ist wegen des einfachen Aufbaus des Transponders günstig. Durch die unterschiedlichen Polarisationen des Sendesignals gibt es keine störende Kopplung, so daß vorteilhaft die Funktionssicherheit der Datenübertragung gewährleistet ist.

Eine besonders einfache Ausführung eines Bakengerätes ergibt sich dadurch, daß im Downlink-Betrieb eine erste Polarisation des Sendesignals erfolgt und im Uplink-Betrieb eine zweite Polarisation. Beim Uplink-Betrieb kann dann das Fahrzeuggerät in der zweiten Polarisationsebene das Datensignal zurücksenden. Dadurch ergibt sich vorteilhaft ein einfacher Aufbau für das Fahrzeuggerät, da aufwendige Filter nicht benötigt werden.

Weitere Vorteile sind der Beschreibung entnehmbar.

### Zeichnung

Ein Ausführungsbeispiel ist in der Zeichnung dargestellt und in der nachfolgenden Beschreibung näher erläutert. Es zeigen Figur 1 das Blockschaltbild einer Bake, Figur 2 das Blockschaltbild eines Fahrzeuggerätes und Figur 3 eine Zirkularpolarisation.

### Beschreibung des Ausführungsbeispiels

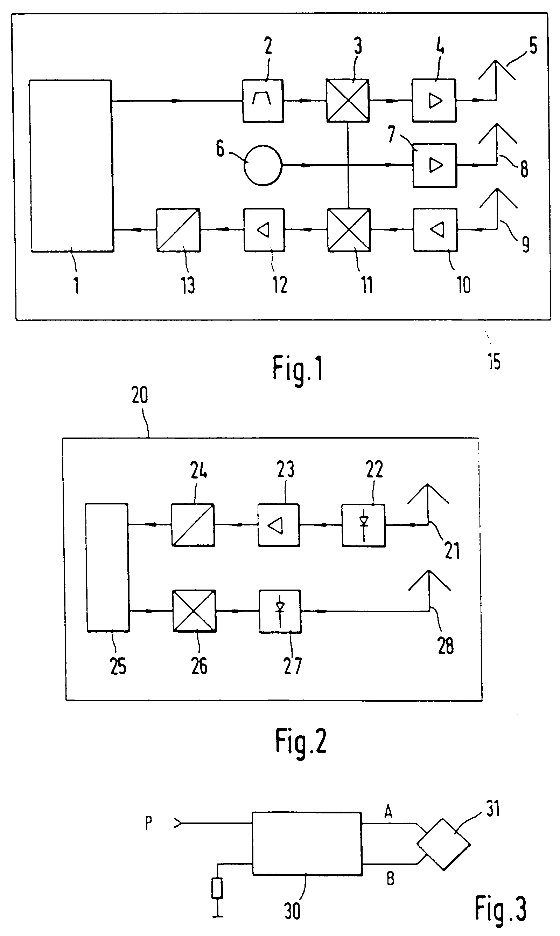

Figur 1 zeigt ein Bakengerät, kurz Bake genannt, bei dem ein Mikrorechner 1 zunächst mit einem Codierer 2 verbunden ist. Dem Codierer 2 ist ein Modulator 3 und ein erster Verstärker 4 nachgeschaltet. Der Ausgang des ersten Verstärkers 4 ist mit einer ersten Sendeantenne 5 verbunden. Die erste Sendeantenne ist für die erste Polarisationsebene, beispielsweise für die horizontale Abstrahlung des Sendesignales, ausgebildet. Die Bake hat weiter einen Lokaloszillator 6, der über eine zweite Verstärkerstufe 7 mit einer zweiten Sendeantenne 8 für die zweite Polarisationsebene, beispielsweise vertikal polarisiert, ausgebildet ist. Eine Empfangsantenne 9 ist mit einem dritten Verstärker 10 verbunden. Der Ausgang eines Rückmischers 11 ist über einen Basisbandverstärker 12 mit einem Decoder 13 verbunden. Der Ausgang des Decoders 13 ist mit einem Eingang des Mikrorechners 1 verbunden.

Figur 2 zeigt ein Blockschaltbild für ein Fahrzeuggerät, das auch OBU (On Board Unit) bezeichnet wird. Das Fahrzeuggerät hat eine Empfangsantenne 21, die mit einem ersten Detektor 22 verbunden ist. Die Empfangsantenne 21 ist auf die Frequenz und Polarisation der ersten Sendeantenne 5 abgestimmt. Der Ausgang des ersten Detektors 22 ist mit einem ersten Verstärker 23 über einen Decoder 24 mit dem Eingang eines als Steuerung ausgebildeten Mikrorechners 25 verbunden. Ein Ausgang des Mikrorechners 25 ist weiter mit einem Modulator 26 verbunden, dessen Ausgang über einen zweiten Detektor 27 mit einer Sendeantenne 28 verbunden ist. Die Empfangsantenne 21 ist für die erste Polarisationsebene und die Sendeantenne 28 für die zweite Polarisationsebene ausgebildet.

Im folgenden wird die Funktionsweise dieser Schaltungsanordnung beschrieben. Sowohl die Bake als auch die OBU mit ihren Komponenten wie Mikrorechner, Codierer, Modulator, Verstärker, Demodulator und Dekoder, die nach dem passiven Transponder-Verfahren arbeiten, sind dem Fachmann beispielsweise aus der Veröffentlichung "Advanced Telematics Inhold Transport" Proceedings of the DRIVE Conference, 4. - 6. Februar 1991 (Seite 248 - 268) bekannt. Sowohl das passive Transponder-Verfahren als auch die einzelnen Komponenten müssen daher nicht näher erläutert werden. Die bekannten Komponenten können für das erfindungsgemäße Verfahren bzw. für den Aufbau der Bake oder der OBU verwendet werden.

Im folgenden wird die Funktionsweise der Duplex-Datenübertragung zwischen der Bake 15 und dem Fahrzeuggerät 20 nach dem passiven Transponder-Verfahren erläutert. Die Übertragung von Daten von der Bake 15 zum Fahrzeuggerät 20 erfolgt üblicherweise im ASK-Verfahren (Amplitude Shift Keying), d. h. die Bake sendet ein amplitudenmoduliertes Signal im Downlink an das Fahrzeuggerät 20. Dabei erzeugt der Mikrorechner 1 durch Codierung eines Trägersignals am Codierer 2 und dem Modulator 3 das Sendesignal, das anschließend vom Verstärker 4 verstärkt wird. Die erste Sendeantenne 5 sendet das erzeugte Datensignal mit der ersten Polarisationsebene 1 an das Fahrzeuggerät 20. Das Fahrzeuggerät 20 empfängt mit seiner Empfangsantenne 21, die die gleiche Polarisationsebene wie die erste Sendeantenne 5 hat. Nach weiterer Signalverarbeitung durch den Detektor 22, durch den die Trägerfrequenz eliminiert wird, erfolgt nach dem ersten Verstärker 23 die Decodierung. Das decodierte Datensignal wird dann von dem Mikrorechner 25 verarbeitet.

Parallel oder zeitgleich zu diesem Vorgang bildet die Bake 15 mit Hilfe des Lokaloszillators 6 ein nichtmoduliertes Trägersignal (Continuous Wave, CW-Signal), das verstärkt über die zweite Sendeantenne 8 mit der zweiten Polarisationsebene gesendet wird. Dieses CW-Signal wird durch die Antenne 28 des Fahrzeuggerätes 20 empfangen. Aus diesem CW-Signal bildet der Mikrorechner 25 zunächst über den zweiten Detektor 27 die für die OBU erforderliche Betriebsspannung. Durch die Betriebsspannung wird des weiteren der Mikrorechner 25 aktiviert und moduliert dann das empfangene Trägersignal mit den in seinem Speicher enthaltenen Daten. Durch Ansteuerung des zweiten Detektors 27 mit einem Strom gelangt dieser nunmehr in einen anderen Arbeitsbereich, so daß dadurch der Reflexionsfaktor der Diode geändert wird. Das so erzeugte Datensignal wird dann über die Antenne 28 mit der zweiten Polarisationsebene im Uplink an die Bake 15 gesendet. Das gesendete Signal wird von der Empfangsantenne 9 in der gleichen, zweiten Polarisationsebene empfangen und gegebenenfalls verstärkt und über den Rückmischer 11 rückgemischt. Nach Verarbeitung über den Basisbandverstärker 12 und Decoder 13 wird das decodierte Datensignal in den Mikrorechner 1 eingegeben und kann dort ausgewertet werden.

Die Polarisation wird mit Hilfe der Antennen realisiert. Für die erste und zweite Polarisationsebene sind grundsätzlich zwei orthogonale Polarisationsarten verwendbar:
a) Bei der vertikalen Polarisation und der horizontalen Polarisation wird die jeweils komplementäre Polarisation durch Drehung der Antenne um die Ausbreitungsachse erzeugt.
b) Die linksdrehend zirkulare Polarisation und die rechtsdrehend zirkulare Polarisation kann am einfachsten mit einem sogenannten 90°-Hybrid erzeugt werden:
   Das 90°-Hybrid 30 ist eine bekannte Schaltung, die eine Eingangsleistung in zwei gleich große Ausgangsleistungen aufteilt, die um 90° phasenverschoben sind und die über eine Antenne 31 abstrahlbar sind (Figur 3). Es sind auch spezielle Antennen zur Erzeugung der zirkularen Polarisation verwendbar.

Eine typische Anwendung für die bidirektionale Datenübertragung nach dem Transponderverfahren ist beispielsweise der Austausch von Fahrzeugdaten oder das Abbuchen von Straßenbenutzungsgebühren etc.

## Patentansprüche

1. Verfahren zur Duplex-Datenübertragung zwischen einer feststehenden Bake zu einem Fahrzeuggerät (Downlink-Betrieb) und umgekehrt zwischen dem Fahrzeuggerät und der Bake (Uplink-Betrieb), dadurch gekennzeichnet daß die Datenübertragung im Downlink- und im Uplink-Betrieb auf der gleichen Frequenz erfolgt und daß für den Downlink-Betrieb und den Uplink-Betrieb unterschiedliche Polarisationsrichtungen der Sendesignale verwendet werden.

2. Verfahren nach Anspruch 1, dadurch gekennzeichnet, daß im Downlink- und Uplink-Betrieb die Datenübertragung zeitgleich erfolgt.

3. Verfahren nach einem der vorhergehenden Ansprüche dadurch gekennzeichnet, daß die Datenübertragung nach dem passiven Transponder-Verfahren erfolgt.

4. Verfahren nach Anspruch 3, dadurch gekennzeichnet, daß im Downlink-Betrieb eine erste Polarisation des Sendesignals erfolgt, daß im Uplink-Betrieb eine zweite Polarisation des Sendesignals erfolgt, wobei zunächst die Bake (15) ein moduliertes Signal (Continuous-Wave-Signal) an das Fahrzeuggerät (20) sendet und das Fahrzeuggerät (20) in der ersten oder zweiten Polarisation das Datensignal zurücksendet.

5. Bake zur Durchführung des Verfahrens nach einem der vorhergehenden Ansprüche, dadurch gekennzeichnet, daß die Bake (15) für jede Polarisation eine Sende- und/oder Empfangsantenne (5, 8, 9) aufweist.

6. Bake nach Anspruch 5, dadurch gekennzeichnet, daß die Bake (15) einen Oszillator zur Erzeugung des modulierten Sendesignals (CB-Signal) für den Uplink-Betrieb aufweist.

7. Bake nach Anspruch 5 oder 6, dadurch gekennzeichnet, daß die Bake (15) eine Sendeantenne (5) für die erste Polarisationsrichtung und jeweils eine Sende- und Empfangsantenne (8, 9) für die zweite Polarisationsrichtung aufweist.

8. Fahrzeuggerät zur Durchführung des Verfahrens nach einem der vorhergehenden Ansprüche, dadurch gekennzeichnet, daß das Fahrzeuggerät (20) wenigstens eine Antenne (21, 28) für zwei verschiedene Polarisationsrichtungen aufweist.

9. Fahrzeuggerät nach Anspruch 8, dadurch gekennzeichnet, daß das Fahrzeuggerät (20) eine Empfangsantenne (21) für die erste Polarisationsrichtung und eine Sendeantenne (28) für die zweite Polarisationsrichtung aufweist.
